# EUROPÄISCHE PATENTANMELDUNG

(11) **EP 2 811 269 A1**
(43) Veröffentlichungstag der Anmeldung: **10.12.2014**
(21) Anmeldenummer: 13170914.9
(22) Anmeldetag: 06.06.2013
(51) Int. Cl.: G01F 23/00

(54) **Multigrenzstandmessgerät**

(71) Anmelder: VEGA Grieshaber KG, 77709 Wolfach (DE)
(72) Erfinder: Fehrenbach, Josef, 77716 Haslach (DE); Deck, Thomas, 77709 Wolfach (DE); Mellert, Martin, 77790 Steinach (DE)
(74) Vertreter: Maiwald Patentanwalts GmbH

(57) **Zusammenfassung**

Zur Erfassung eines Grenzstands wird ein Multigrenzstandmessgerät eingesetzt, welches zwei verschiedene Messdatenauswerteverfahren verwendet. Die auszuwertenden Messdaten werden von einer Multigrenzstandsensoranordnung erfasst, welche sich verschiedener physikalischer Messprinzipien bedienen kann. Auf diese Weise kann die Wahrscheinlichkeit, dass der Grenzstand fehlerhaft erfasst wird, herabgesetzt werden.

## Beschreibung

### Gebiet der Erfindung

Die Erfindung betrifft die Grenzstandmessung. Insbesondere betrifft die Erfindung ein Multigrenzstandmessgerät zur Grenzstandbestimmung unter Verwendung von mindestens zwei unterschiedlichen Messdatenauswerteverfahren, die Verwendung eines ersten Grenzstandsensors und eines zweiten Grenzstandsensors zur Grenzstandbestimmung, eine Auswerteeinheit zur Bestimmung eines Grenzstands unter Verwendung von mindestens zwei unterschiedlichen Messdatenauswerteverfahren, sowie ein Verfahren zur Grenzstandbestimmung, ein Programmelement und ein computerlesbares Medium.

### Technischer Hintergrund

Zur Grenzstandmessung in Behältern werden oft Vibrationssensoren verwendet, welche zwei Schenkel aufweisen, die über einen Aktuator in Vibration versetzt werden. Diese Art von Sensoren wird auch als "Stimmgabel" bezeichnet. Ein derartiger Grenzstandsensor weist einen verhältnismäßig komplexen, mechanischen Aufbau auf und ist für einige Medien ungeeignet. Insbesondere können Anhaftungen an der Sensoroberfläche zu Messungenauigkeiten führen.

### Zusammenfassung der Erfindung

Es ist eine Aufgabe der Erfindung, einen Grenzstandsensor anzugeben, der alternativ zu einem Stimmgabelsensor eingesetzt werden kann.

Diese Aufgabe wird durch die Merkmale des Patentanspruchs 1 gelöst. Weiterbildungen der Erfindung ergeben sich aus den übrigen Ansprüchen und der folgenden Beschreibung von Ausführungsbeispielen.

Gemäß einem ersten Aspekt der Erfindung ist ein Multigrenzstandmessgerät angegeben, welches zur Grenzstandbestimmung unter Verwendung von mindestens zwei unterschiedlichen Messdatenauswerteverfahren ausgeführt ist. Bereits durch die Anwendung jeweils eines der beiden Messdatenauswerteverfahren kann der Grenzstand eines Füllmediums in einem Behälter detektiert werden. In anderen Worten führt also die Anwendung des ersten Messdatenauswerteverfahrens zu einer ersten Grenzstanddetektion und die Anwendung des zweiten Messdatenauswerteverfahrens zu einer zweiten Grenzstanddetektion bzw. alternativ zur Plausibilisierung des ersten Messdatenauswerteverfahrens.

Das Multigrenzstandmessgerät weist eine Multigrenzstandsensoranordnung zur Erfassung von Messdaten sowie eine Auswerteeinheit zur Auswertung zumindest einer ersten Untermenge der erfassten Messdaten (oder der gesamten erfassten Messdaten) und zumindest einer zweiten Untermenge der erfassten Messdaten (oder der gesamten erfassten Messdaten) auf. Die Auswertung zumindest der ersten Untermenge dient der Bestimmung des Grenzstands unter Anwendung des ersten Messdatenauswerteverfahrens und die Auswertung zumindest der zweiten Untermenge dient der Bestimmung des Grenzstands unter Anwendung des zweiten Messdatenauswerteverfahrens.

Die Multigrenzstandsensoranordnung kann hierfür einen oder mehrere Sensoren aufweisen, welche die Messdaten erfassen. Beispielsweise ist es möglich, dass diese Sensoren unterschiedliche physikalische Messverfahren anwenden und somit den Grenzstand auf grundsätzlich verschiedene Weise bestimmen. Auch ist es beispielsweise möglich, dass die Multigrenzstandsensoranordnung mit demselben Sensor bzw. denselben Sensoren unterschiedliche Messungen durchführt und somit unterschiedliche Datensätze aufzeichnet, die dann unterschiedlichen Auswerteverfahren unterworfen werden.

Das Ergebnis der Auswertung sind zwei Messergebnisse, die beide verwendet werden können, um zu entscheiden, ob der Grenzstand erreicht ist oder nicht.

Gemäß einer Ausführungsform der Erfindung weist die Multigrenzstandsensoranordnung ein Gehäuse mit einem Endbereich auf, der für die Grenzstandbestimmung (Grenzstanddetektion) zum Eintauchen in ein Füllmedium bestimmt ist, wobei dieser Endbereich des Gehäuses eine einzelne Querschnittsfläche aufweist und sich somit nicht gabelförmig (im Gegensatz zur Stimmgabel) erstreckt.

Der Endbereich des Gehäuses bildet also nicht zwei Schenkel aus, sondern ist kastenförmig, stabförmig oder dergleichen ausgeführt.

Gemäß einer weiteren Ausführungsform der Erfindung besteht zumindest der Endbereich des Gehäuses aus Metall. Auch der restliche Bereich des Gehäuses kann vollständig oder im Wesentlichen aus Metall bestehen.

Gemäß einer weiteren Ausführungsform der Erfindung besteht zumindest der Endbereich des Gehäuses aus einem nicht elektrisch leitfähigen Material.

Gemäß einer weiteren Ausführungsform der Erfindung besteht zumindest der Endbereich des Gehäuses aus einem Metall und einem nicht elektrisch leitfähigen Material. Der Wechsel zwischen Metall und nicht elektrisch leitfähigem Material kann abschnittsweise erfolgen, so dass also bestimmte Bereiche des Gehäuses aus Metall gefertigt sind und bestimmte andere Bereiche des Gehäuses aus dem elektrisch nicht leitfähigem Material.

Gemäß einer weiteren Ausführungsform der Erfindung weist die Multigrenzstandsensoranordnung einen Vibrations-Aktuator auf, der auf der Innenseite des Endbereichs des Gehäuses angebracht ist, um Vibrationen auf den Endbereich des Gehäuses zu übertragen.

Der Endbereich des Gehäuses kann somit in Schwingungen versetzt werden.

Die Multigrenzstandsensoranordnung kann dann mit Hilfe dieses oder eines anderen Vibrations-Aktuators die Vibration des Gehäuses, beispielsweise dessen Resonanzfrequenz oder Schwingungsamplitude, messen, um zu entscheiden, ob der Grenzstand des Füllmediums erreicht ist oder nicht.

Gemäß einer weiteren Ausführungsform der Erfindung weist die Multigrenzstandsensoranordnung eine Membran auf, die im Endbereich des Gehäuses angebracht ist und zur Aufnahme der Vibration des Vibrations-Aktuators ausgeführt ist.

Weiter kann die Multigrenzstandsensoranordnung einen Dehnungsmessstreifen oder eine andere Einrichtung, die der Druckmessung dient, aufweisen, um zumindest die erste Untermenge der zu erfassenden Messdaten zu erfassen.

Auch kann die Multigrenzstandsensoranordnung einen Vibrationssensor zur Erfassung der zweiten Untermenge der Messdaten aufweisen.

Gemäß einer weiteren Ausführungsform der Erfindung weist die Multigrenzstandsensoranordnung einen Radarsensor, einen Kapazitätensensor, einen Impedanzsensor, einen optischen Sensor, einen Temperatursensor und/oder einen Leitfähigkeitssensor zur Erfassung der ersten und/oder der zweiten Untermenge der erfassten Messdaten auf.

Das Multigrenzstandmessgerät kann sich also, gemäß einem Ausführungsbeispiel der Erfindung, zur Grenzstandbestimmung zweier oder mehrerer physikalischer Messprinzipien bedienen und somit getrennt voneinander zwei oder mehr Grenzstanddetektionen (Grenzstandbestimmungen) durchführen. Hierbei ist es möglich, dass stets beide Messprinzipien verwendet werden, um die Wahrscheinlichkeit einer Fehlmessung zu verringern. Das zweite Messprinzip kann beispielsweise zur Plausibilitätskontrolle des Ergebnisses des ersten Messprinzips verwendet werden.

Auch ist es möglich, dass das Multigrenzstandmessgerät je nach Umgebungsbedingungen (Art des Füllmediums, Temperatur, Luftfeuchte, etc.) selbstständig zwischen dem ersten Messdatenauswerteverfahren und dem zweiten Messdatenauswerteverfahren umschaltet. Da diese Umschaltung erfolgt, kann es ausreichen, lediglich diejenigen Messdaten zu erfassen, die für das entsprechende, aktivierte Messdatenauswerteverfahren heranzuziehen sind. In diesem Fall ist es möglich, dass die Bauteile der Multigrenzstandsensorenanordnung, die mit der Erfassung dieser Messdaten nichts zu tun haben, deaktiviert sind.

Das Multigrenzstandmessgerät kann also beispielsweise zur Verwendung zweier unterschiedlicher physikalischer Messprinzipen ausgeführt sein. Es kann eine einfache Sensorik aufweisen, die durch die Verwendung unterschiedlicher physikalische Messprinzipien in nahezu allen Medien eingesetzt werden kann.

Gemäß einem weiteren Aspekt der Erfindung ist die Verwendung eines ersten Grenzstandsensors und eines zweiten Grenzstandsensors innerhalb eines Gehäuses zur Detektion eines Grenzstands angegeben. Bei den Grenzstandsensoren kann es sich um kontinuierlich messende Sensoren oder klassische Grenzstandsensoren handeln, die lediglich bestimmen können, ob der Grenzstand erreicht ist, oder nicht.

Gemäß einem weiteren Aspekt der Erfindung ist eine Auswerteeinheit zur Detektion eines Grenzstands unter Verwendung von mindestens zwei unterschiedlichen Messdatenauswerteverfahren angegeben. Durch die Anwendung jeweils eines der beiden Messdatenauswerteverfahren kann der Grenzstand detektiert werden. Die Auswerteeinheit ist zur Auswertung zumindest einer ersten Untermenge von erfassten Messdaten, um den Grenzstand unter Anwendung eines ersten Messdatenauswerteverfahrens zu detektieren, und zur Auswertung zumindest einer zweiten Untermenge der erfassten Messdaten, um den Grenzstand unter Anwendung eines zweiten Messdatenauswerteverfahrens zu detektieren, ausgeführt.

Gemäß einem weiteren Aspekt der Erfindung ist ein Verfahren zur Detektion eines Grenzstands unter Verwendung von mindestens zwei unterschiedlichen Messdatenauswerteverfahren angegeben, bei dem Messdaten durch eine Multigrenzstandsensoranordnung erfasst werden, zumindest eine erste Untermenge der erfassten Messdaten ausgewertet wird, um den Grenzstand unter Anwendung eines ersten Messdatenauswerteverfahrens zu detektieren, und eine Auswertung zumindest einer zweiten Untermenge der erfassten Messdaten vorgenommen wird, um den Grenzstand unter Anwendung eines zweiten Messdatenauswerteverfahrens zu detektieren, wobei die beiden Messdatenauswerteverfahren unterschiedliche Verfahren sind.

Gemäß einem weiteren Aspekt der Erfindung ist ein Programmelement angegeben, das, wenn es auf einem Prozessor eines Multigrenzstandmessgeräts ausgeführt wird, das Messgerät anleitet, die oben und im Folgenden beschriebenen Verfahrensschritte durchzuführen.

Gemäß einem weiteren Aspekt der Erfindung ist ein computerlesbares Medium angegeben, auf dem ein Programmelement gespeichert ist, das, wenn es auf einem Prozessor eines Multigrenzstandmessgeräts ausgeführt wird, das Messgerät anleitet, die oben und im Folgenden beschriebenen Verfahrensschritte auszuführen.

Weiter sei darauf hingewiesen, dass das Multigrenzstandmessgerät ausgeführt sein kann, sämtliche oben und im Folgenden beschriebenen Verfahrensschritte durchzuführen.

Im Folgenden werden mit Verweis auf die Figuren Ausführungsbeispiele der Erfindung beschrieben.

### Kurze Beschreibung der Figuren

- Fig. 1: zeigt einen Behälter, der teilweise mit einem Füllmedium gefüllt ist und drei Multigrenzstandmessgeräte aufweist.
- Fig, 2: zeigt den Endbereich eines Multigrenzstandmessgeräts gemäß einem Ausführungsbeispiel der Erfindung.
- Fig. 3: zeigt den Endbereich eines Multigrenzstandmessgeräts gemäß einem weiteren Ausführungsbeispiel der Erfindung.
- Fig. 4: zeigt den Endbereich eines Multigrenzstandmessgeräts gemäß einem weiteren Ausführungsbeispiel der Erfindung.
- Fig. 5: zeigt den Endbereich eines Multigrenzstandmessgeräts gemäß einem weiteren Ausführungsbeispiel der Erfindung.
- Fig. 6: zeigt ein Multigrenzstandmessgerät gemäß einem weiteren Ausführungbeispiel der Erfindung.
- Fig. 7: zeigt den Endbereich eines Multigrenzstandmessgeräts gemäß einem weiteren Ausführungsbeispiel der Erfindung.
- Fig. 8: zeigt ein Multigrenzstandmessgerät gemäß einem weiteren Ausführungsbeispiel der Erfindung.
- Fig. 9: zeigt ein Flussdiagramm eines Verfahrens gemäß einem Ausführungbeispiel der Erfindung.

### Detaillierte Beschreibung von Ausführungsbeispielen

Die Darstellungen in den Figuren sind schematisch und nicht maßstäblich.

Werden in der folgenden Figurenbeschreibung in verschiedenen Figuren die gleichen Bezugszeichen verwendet, so bezeichnen diese gleiche oder ähnliche Elemente. Gleiche oder ähnliche Elemente können aber auch durch unterschiedliche Bezugszeichen bezeichnet sein.

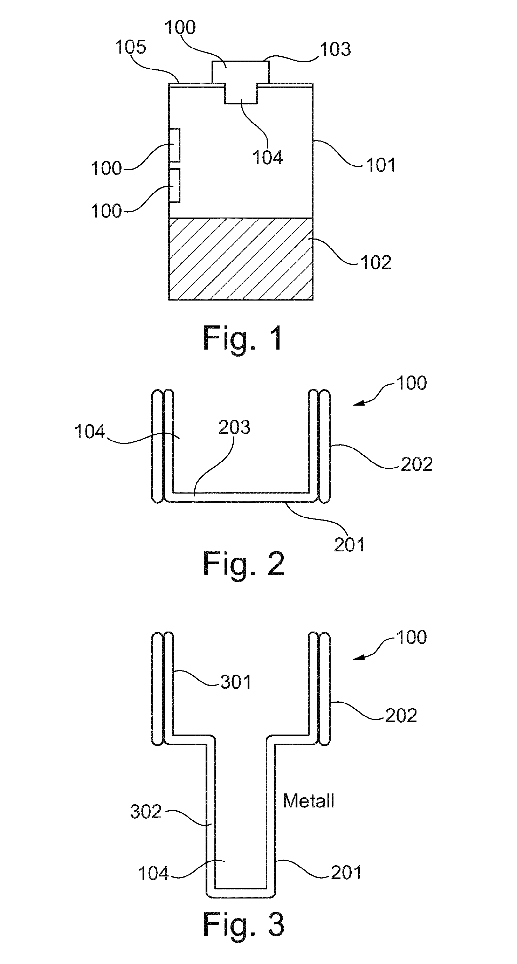

Fig. 1 zeigt einen Behälter 101, der ein Füllmedium 102 enthält. Es sind drei Multigrenzstandsensoren 100 vorgesehen, von denen einer im Behälterdeckel 105 eingebaut ist und von denen die beiden weiteren an der seitlichen Behälterwandung angebracht sind.

Das im Behälterdeckel eingebaute Multigrenzstandmessgerät kann beispielsweise in einen Behälterflansch eingeschraubt sein. Die seitlich an der Behälterwandung angebrachten Messgeräte können so ausgeführt sein, dass sie direkt an die Behälterwandung angeschraubt oder anderweitig daran befestigt werden.

Der obere Multisensor weist einen Grundkörper 103 und einen Endbereich 104 auf, der in den Behälter hineinragt und zum Kontakt mit dem Füllmedium 102 ausgeführt ist. Erreicht das Füllmedium den Gehäuseteil 104 des Multigrenzstandmessgeräts, der die Grenzstandsensorik aufweist, wird dies von dem Messgerät detektiert.

Um die Fehlerwahrscheinlichkeit bei der Grenzstanddetektion herabzusetzen, weist das Messgerät eine Multigrenzstandsensoranordnung auf, die in der Lage ist, Messdaten zu erfassen, aus deren Analyse dann bestimmt werden kann, ob der Grenzstand erreicht ist oder nicht. Die erfassten Messdaten können auf zwei oder mehrere unterschiedliche Weisen ausgewertet und analysiert werden. Zur Aufnahme der Messdaten können verschiedene Einzelsensoren vorgesehen sein, so dass zur Detektion des Grenzstands beispielsweise die Messdaten eines Sensors bzw. einer Sensorgruppe mit Hilfe eines ersten Messdatenauswerteverfahrens ausgewertet werden und die Messdaten eines zweiten Sensors bzw. einer zweiten Sensorgruppe mit Hilfe eines zweiten Messdatenauswerteverfahrens ausgewertet und analysiert werden. Das Ergebnis dieser Auswertung und Analyse sind zwei oder mehr Antworten auf die Frage, ob der Grenzstand bereits erreicht ist oder nicht.

Die unterschiedlichen Messdatenauswerteverfahren können dazu eingesetzt werden, eine Plausibilitätskontrolle des Messergebnisses durchzuführen, so dass die Wahrscheinlichkeit eines falschen Endergebnisses verringert wird.

Fig. 2 zeigt den Endbereich 104 eines Gehäuses eines Multigrenzstandmessgeräts, in welchem die Sensorik oder zumindest wesentliche Teile der Sensorik untergebracht sind. Der Endbereich des Gehäuses befindet sich in einer Durchführung durch einen Behälterdeckel oder eine Behälterwandung 202 und schließt beispielsweise bündig mit dem unteren Ende der Durchführung ab. Der Boden 201 des Gehäuseendbereichs kann eine Membran 203 aufweisen, welche von einem Aktuator des Multigrenzstandmessgeräts zu Vibrationen angeregt wird. Es ist eine Sensorik vorgesehen, welche die Resonanzfrequenz oder die Amplitude dieser Membranschwingung misst und somit den Grenzstand detektieren kann, sobald er sich einstellt.

Im Ausführungsbeispiel der Fig. 2 ist zumindest der Endbereich des Gehäuses aus Metall gefertigt. Beispielsweise kann das komplette Gehäuse des Multigrenzstandmessgeräts aus Metall gefertigt sein.

Das Gehäuse kann beispielsweise zylinderförmig oder rechteckig ausgeführt sein. Auch kann die Querschnittsfläche des Endbereichs oval ausgeführt sein.

Im Falle der Ausführung des Gehäuses oder zumindest des Endbereiches des Gehäuses aus Metall ist es möglich, den Grenzstand über das Schwingungsverhalten der "Membran" 203 zu detektieren. Hierfür können Schwingungen im Ultraschallbereich eingesetzt werden, deren Frequenz, Amplitude, Güte und/oder unterschiedliche Schwingungsmodi gemessen werden.

Zusätzlich hierzu kann die Messung des Drucks außerhalb des Messgeräts erfolgen, beispielsweise unter Zuhilfenahme von Dehnungsmessstreifen, die innen am Gehäuse oder außen auf dem Gehäuse aufgeklebt oder anderweitig daran angebracht sind. Taucht der Endbereich des Gehäuses in das Füllmedium ein, ändert sich der Druck auf das Gehäuse signifikant und diese Druckänderung kann über den Dehnungsmessstreifen erfasst werden.

Das Ausführungsbeispiel der Fig. 3 zeigt ein Multigrenzstandmessgerät 100, bei dem der Endbereich des Gehäuses ebenfalls aus Metall besteht, wobei ein Stab oder Topf 302 in den Behälter hineinragt.

Der darüber liegende Bereich 301 des Gehäuses kann, ähnlich dem Ausführungsbeispiel der Fig. 2, in den Behälterflansch eingeschraubt sein. An diesen weiteren Bereich schließt sich dann der schmälere Endbereich 302 an.

Statt der in der Fig. 2 dargestellten Membran kann im Ausführungsbeispiel der Fig. 3 das Schwingungsverhalten des stabförmigen Bereiches 302 gemessen werden. Auch kann mit Hilfe eines Dehnungsmessstreifens die Verbiegung des Stabes, die durch Auftrieb im Füllmedium entsteht, gemessen werden. Darüber hinaus können Temperaturmessungen vorgesehen sein, die an unterschiedlichen Stellen des Stabes erfolgen können und unter Umständen mit einem zusätzlichen Heizen des Stabes einhergehen können.

Aus der Vielfalt der in diesen und den anderen Ausführungsbeispielen erfassten Messdaten kann unter Verwendung von zwei oder mehr als zwei Messdatenauswerteverfahren sehr genau festgestellt werden, ob der Grenzstand erreicht ist oder nicht.

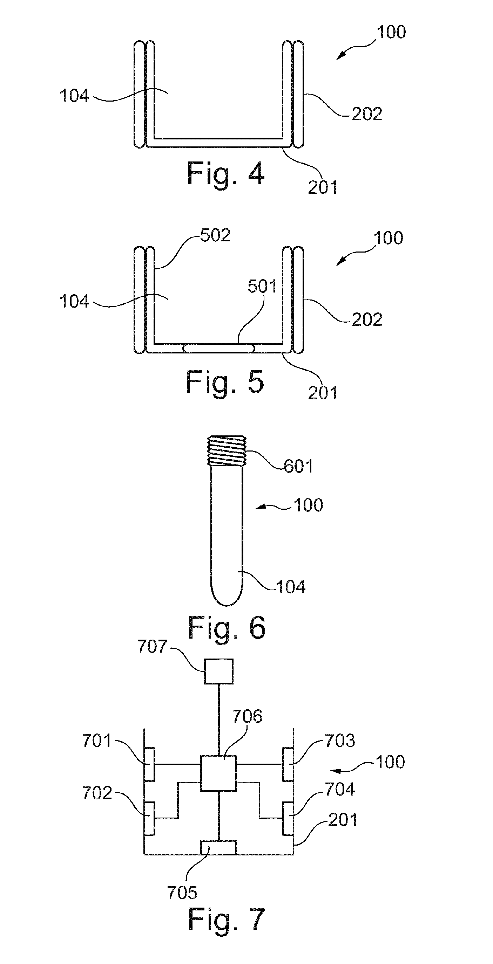

Fig. 4 zeigt den Endbereich 104 eines Gehäuses, welches eine teilweise oder komplett nicht leitende Hülle aufweist. Es können dieselben Multigrenzstandsensoranordnungen wie in den Ausführungsbeispielen der Figuren 2 und 3 vorgesehen sein und insbesondere können dieselben Messungen wie im Falle des metallischen Gehäuses durchgeführt werden. Darüber hinaus können aber auch Radarmessungen (freistrahlend oder geführt), kapazitive Messungen mit unterschiedlichen Frequenzen, Impedanzmessungen und optische Messungen mit Licht vorgesehen sein. In diesem Falle ist/sind ein entsprechender Radarsensor, ein kapazitiver Sensor, ein Impedanzsensor und/oder ein optischer Sensor in das Gehäuse eingebaut.

Fig. 5 zeigt ein Ausführungsbeispiel eines Multigrenzstandmessgeräts mit einem Gehäuseendbereich 201, der in einem ersten Bereich 501 metallisch ist und in einem zweiten Bereich 502 aus einem nicht elektrisch leitfähigen Material besteht.

Der metallische Bereich befindet sich beispielsweise am Boden des Endbereichs und kann kreisförmig ausgeführt und koaxial zur Längsachse des Messgeräts angeordnet sein. Die übrigen Bereiche des Gehäuses können aus nicht leitfähigem Material bestehen.

In diesem Ausführungsbeispiel kann, je nach Konfiguration des Messgeräts, die Durchführung derselben Messungen wie im Ausführungsbeispiel der Fig. 4 vorgesehen sein. Darüber hinaus ist es möglich, eine konduktive Messung und/oder eine kapazitive Messung in Kombination mit einer konduktiven Messung vorzusehen. Die kapazitiven und die konduktiven Messungen können zur gegenseitigen Plausibilisierung eingesetzt werden.

Fig. 6 zeigt ein weiteres Ausführungsbeispiel, bei dem das Multigrenzstandmessgerät 100 ein zylinderförmiges Gehäuse aufweist, welches im unteren Bereich abgerundet ist. Im oberen Bereich 601 kann ein Gewinde vorgesehen sein, um das Messgerät in einen Behälterflansch einzuschrauben.

Durch die Abrundung im unteren Bereich kann das Abtropfverhalten verbessert werden.

Fig. 7 zeigt ein weiteres Ausführungsbeispiel für den Endbereich des Gehäuses. Es sind mehrere Einzelsensoren 701, 702, 703, 704, 705 vorgesehen. Bei den Sensoren 703, 704, 705 handelt es sich beispielsweise um Piezoaktuatoren, welche einerseits Vibrationen in das Gehäuse oder die Membran einleiten können und andererseits Druckänderungen aufnehmen können, die dann ausgewertet werden können. Die Sensoren 701, 702 sind beispielsweise Dehnungsmessstreifen.

Beispielsweise weist der Endbereich des Gehäuses 100 einen Durchmesser von 2 cm und eine Länge von 3 cm auf.

Da das Multigrenzstandmessgerät den Grenzstand auf mindestens zwei verschiedene Weisen detektiert, ist es universell einsetzbar. Beispielsweise kann je nach Messumgebung das jeweils geeignetste Messdatenauswerteverfahren gewählt werden. Auch ist es möglich, dass zusätzliche Messdatenauswerteverfahren zur Plausibilitätskontrolle des Messergebnisses verwendet werden.

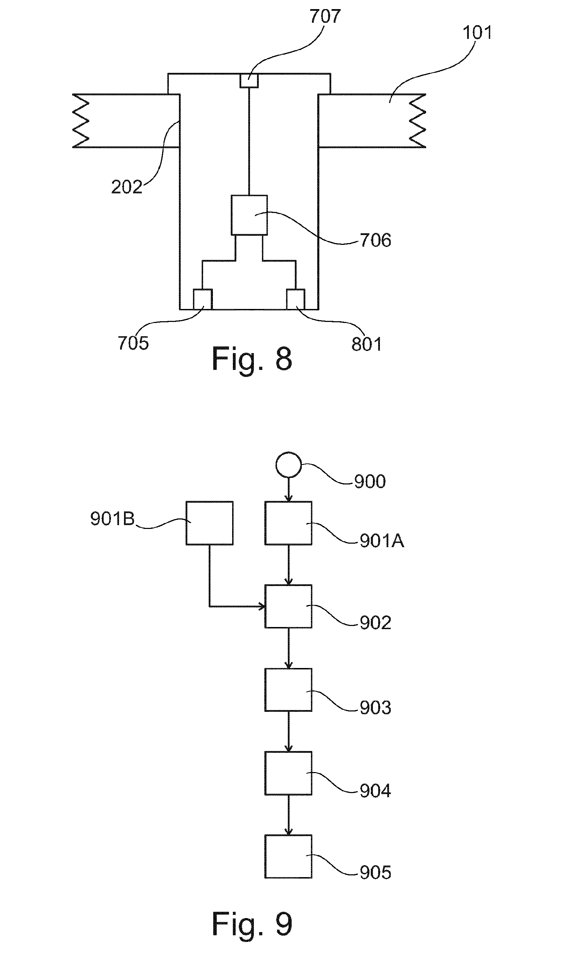

Fig. 8 zeigt ein weiteres Ausführungsbeispiel eines Multigrenzstandmessgeräts. Das Messgerät weist zwei Sensoren 705, 801 auf, welche jeweils zur Detektion eines Grenzstands dienen. Bei dem Sensor 705 kann es sich beispielsweise um einen Piezo-Aktuator handeln und bei dem Sensor 801 um einen Radarsensor, einen optischen Sensor, einen Temperatursensor, um einen Impedanzsensor oder einen kapazitiven Sensor.

Beide Sensoren sind an den Prozessor 706 einer Auswerteeinheit angeschlossen, welcher die Sensormessdaten entgegennimmt und auswertet. Entsprechend sind auch die in der Fig. 7 gezeigten Sensoren an den Prozessor 706 angeschlossen. Des weiteren ist der Prozessor 706 an eine Schnittstelle 707 angeschlossen, mit welcher das Messgerät mit weiteren Geräten verbunden werden kann, beispielsweise über eine 4...20 mA Zweidrahtleitung.

Auch kann eine Drahtlosschnittstelle zur drahtlosen Übertragung der vom Prozessor 706 erzeugten Daten vorgesehen sein.

Fig. 9 zeigt ein Flussdiagramm eines Verfahrens gemäß einem Ausführungsbeispiel der Erfindung.

Das Verfahren startet mit Schritt 900. In Schritt 901A werden erste Messdaten von einem oder mehreren Sensoren einer Multigrenzstandsensoranordnung erfasst und davor, danach oder gleichzeitig werden in Schritt 901B die zweiten Messdaten durch dieselbe oder eine andere Sensoranordnung der Multigrenzstandsensoranordnung erfasst. In Schritt 902 werden dann die ersten Messdaten unter Anwendung eines ersten Messdatenauswerteverfahrens ausgewertet, um den Grenzstand zu detektieren. Ebenso werden die zweiten Messdaten unter Anwendung eines zweiten Messdatenauswerteverfahrens ausgewertet, um den Grenzstand ebenfalls zu detektieren.

In Schritt 903 wird überprüft, ob die Ergebnisse der beiden Auswertungen übereinstimmen. Ist dies der Fall, kann in Schritt 904 davon ausgegangen werden, dass das Messergebnis korrekt ist und es wird in Schritt 905 ausgegeben.

Ist dies nicht der Fall, stimmen also die beiden Messergebnisse nicht miteinander überein, führt das Messgerät ein drittes Messdatenauswerteverfahren durch, welches auf die ersten, die zweiten oder weitere, zusätzlich zu erfassende Messdaten (beispielsweise von einer dritten Sensoranordnung) zurückgreift.

Hierdurch kann die Wahrscheinlichkeit eines fehlerhaften Gesamtmessergebnisses herabgesetzt werden.

Ergänzend sei darauf hingewiesen, dass "umfassend" und "aufweisend" keine anderen Elemente oder Schritte ausschließt und "ein" oder "eine" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkungen anzusehen.

## Patentansprüche

1. Multigrenzstandmessgerät (100) zur Grenzstandbestimmung unter Verwendung von mindestens zwei unterschiedlichen Messdatenauswerteverfahren, wobei jedes der beiden Messdatenauswerteverfahren zu einer Detektion des Grenzstands ausgeführt ist, wobei das Multigrenzstandmessgerät aufweist:
eine Multigrenzstandsensoranordnung (201, 705) zur Erfassung von Messdaten;
eine Auswerteeinheit (706) zur Auswertung zumindest einer ersten Untermenge der erfassten Messdaten, um den Grenzstand unter Anwendung eines ersten Messdatenauswerteverfahrens zu detektieren, und zur Auswertung zumindest einer zweiten Untermenge der erfassten Messdaten, um den Grenzstand unter Anwendung eines zweiten, anderen Messdatenauswerteverfahrens zu detektieren.

2. Multigrenzstandmessgerät nach Anspruch 1,
wobei die Multigrenzstandsensoranordnung (201, 705) ein Gehäuse mit einem Endbereich (104), der für die Grenzstandbestimmung zum Eintauchen in ein Füllmedium (102) bestimmt ist, aufweist;
wobei dieser Endbereich des Gehäuses eine einzelne Querschnittfläche aufweist und sich somit nicht gabelförmig erstreckt.

3. Multigrenzstandmessgerät nach einem der vorhergehenden Ansprüche, wobei zumindest der Endbereich (104) des Gehäuses aus Metall besteht.

4. Multigrenzstandmessgerät nach einem der Ansprüche 1 oder 2,
wobei zumindest der Endbereich (104) des Gehäuses aus einem nicht elektrisch leitfähigen Material besteht.

5. Multigrenzstandmessgerät nach einem der Ansprüche 1 oder 2,
wobei zumindest der Endbereich (104) des Gehäuses aus Metall und einem nicht elektrisch leitfähigen Material besteht.

6. Multigrenzstandmessgerät nach einem der vorhergehenden Ansprüche,
wobei die Multigrenzstandsensoranordnung (201, 705) einen Vibrations-Aktuator (701) aufweist, der auf der Innenseite des Endbereichs (104) des Gehäuses angebracht ist, um Vibrationen auf den Endbereich des Gehäuses zu übertragen.

7. Multigrenzstandmessgerät nach Anspruch 6,
wobei die Multigrenzstandsensoranordnung (201, 705) eine Membran (203) aufweist, die im Endbereich (201) des Gehäuses angebracht ist, und zur Aufnahme der Vibrationen des Vibrations-Aktuators (705) ausgeführt ist.

8. Multigrenzstandmessgerät nach einem der vorhergehenden Ansprüche,
wobei die Multigrenzstandsensoranordnung (201, 705) einen Dehnungsmessstreifen (701) zur Erfassung der ersten Untermenge der Messdaten aufweist.

9. Multigrenzstandmessgerät nach einem der vorhergehenden Ansprüche,
wobei die Multigrenzstandsensoranordnung (201, 705) einen Vibrationssensor (704) zur Erfassung der zweiten Untermenge der Messdaten aufweist.

10. Multigrenzstandmessgerät nach einem der vorhergehenden Ansprüche,
wobei die Multigrenzstandsensoranordnung (201, 705) einen Radarsensor (801), einen kapazitiven Sensor (801), einen Impedanzsensor (801), einen optischen Sensor (801), einen Temperatursensor (801) oder einen Leitfähigkeitssensor (801) zur Erfassung der ersten oder zweiten Untermenge der erfassten Messdaten aufweist.

11. Verwendung eines ersten Grenzstandsensors und eines zweiten Grenzstandsensors innerhalb eines Gehäuses (201) zur Detektion eines Grenzstands.

12. Auswerteeinheit (706) zur Detektion eines Grenzstands unter Verwendung von mindestens zwei unterschiedlichen Messdatenauswerteverfahren,
wobei jedes der beiden Messdatenauswerteverfahren zu einer Detektion des Grenzstands ausgeführt ist,
wobei die Auswerteeinheit zur Auswertung zumindest einer ersten Untermenge von erfassten Messdaten, um den Grenzstand unter Anwendung eines ersten Messdatenauswerteverfahrens zu detektieren, und zur Auswertung zumindest einer zweiten Untermenge der erfassten Messdaten, um den Grenzstand unter Anwendung eines zweiten, anderen Messdatenauswerteverfahrens zu detektieren, ausgeführt ist.

13. Verfahren zur Detektion eines Grenzstands unter Verwendung von mindestens zwei unterschiedlichen Messdatenauswerteverfahren, aufweisend die Schritte:
Erfassen von Messdaten durch eine Multigrenzstandsensoranordnung (201, 705);
Auswerten zumindest einer ersten Untermenge der erfassten Messdaten, um den Grenzstand unter Anwendung eines ersten Messdatenauswerteverfahrens zu detektieren,
Auswertung zumindest einer zweiten Untermenge der erfassten Messdaten, um den Grenzstand unter Anwendung eines zweiten, anderen Messdatenauswerteverfahrens zu detektieren;
wobei die beiden Messdatenauswerteverfahren unterschiedliche Verfahren sind.

14. Programmelement, das, wenn es auf einem Prozessor (706) eines Multigrenzstandmessgeräts ausgeführt wird, das Multigrenzstandmessgerät anleitet, die Verfahrensschritte gemäß Anspruch 13 auszuführen.

15. Computerlesbares Medium, auf dem ein Programmelement gespeichert ist, das, wenn es auf einem Prozessor (706) eines Multigrenzstandmessgeräts ausgeführt wird, das Multigrenzstandmessgerät anleitet, die Verfahrensschritte gemäß Anspruch 13 auszuführen.

## Geänderte Patentansprüche

### Geänderte Patentansprüche gemäss Regel 137(2) EPÜ.

**1.** Multigrenzstandmessgerät (100) zur Grenzstandbestimmung unter Verwendung von mindestens zwei unterschiedlichen Messdatenauswerteverfahren, wobei jedes der beiden Messdatenauswerteverfahren zu einer Detektion des Grenzstands ausgeführt ist, wobei das Multigrenzstandmessgerät aufweist:
eine Multigrenzstandsensoranordnung (201, 705) zur Erfassung von Messdaten;
eine Auswerteeinheit (706) zur Auswertung zumindest einer ersten Untermenge der erfassten Messdaten, um den Grenzstand unter Anwendung eines ersten Messdatenauswerteverfahrens zu detektieren, und zur Auswertung zumindest einer zweiten Untermenge der erfassten Messdaten, um den Grenzstand unter Anwendung eines zweiten, anderen Messdatenauswerteverfahrens zu detektieren;
wobei die Multigrenzstandsensoranordnung (201, 705) einen Vibrationssensor (704) zur Erfassung der zweiten Untermenge der Messdaten aufweist.

**2.** Multigrenzstandmessgerät nach Anspruch 1,
wobei die Multigrenzstandsensoranordnung (201, 705) ein Gehäuse mit einem Endbereich (104), der für die Grenzstandbestimmung zum Eintauchen in ein Füllmedium (102) bestimmt ist, aufweist;
wobei dieser Endbereich des Gehäuses eine einzelne Querschnittfläche aufweist und sich somit nicht gabelförmig erstreckt.

**3.** Multigrenzstandmessgerät nach einem der vorhergehenden Ansprüche, wobei zumindest der Endbereich (104) des Gehäuses aus Metall besteht.

**4.** Multigrenzstandmessgerät nach einem der Ansprüche 1 oder 2,
wobei zumindest der Endbereich (104) des Gehäuses aus einem nicht elektrisch leitfähigen Material besteht.

**5.** Multigrenzstandmessgerät nach einem der Ansprüche 1 oder 2,
wobei zumindest der Endbereich (104) des Gehäuses aus Metall und einem nicht elektrisch leitfähigen Material besteht.

**6.** Multigrenzstandmessgerät nach einem der vorhergehenden Ansprüche,
wobei die Multigrenzstandsensoranordnung (201, 705) einen Vibrations-Aktuator (701) aufweist, der auf der Innenseite des Endbereichs (104) des Gehäuses angebracht ist, um Vibrationen auf den Endbereich des Gehäuses zu übertragen.

**7.** Multigrenzstandmessgerät nach Anspruch 6,
wobei die Multigrenzstandsensoranordnung (201, 705) eine Membran (203) aufweist, die im Endbereich (201) des Gehäuses angebracht ist, und zur Aufnahme der Vibrationen des Vibrations-Aktuators (705) ausgeführt ist.

**8.** Multigrenzstandmessgerät nach einem der vorhergehenden Ansprüche,
wobei die Multigrenzstandsensoranordnung (201, 705) einen Dehnungsmessstreifen (701) zur Erfassung der ersten Untermenge der Messdaten aufweist.

**9.** Multigrenzstandmessgerät nach einem der vorhergehenden Ansprüche,
wobei die Multigrenzstandsensoranordnung (201, 705) einen Radarsensor (801), einen kapazitiven Sensor (801), einen Impedanzsensor (801), einen optischen Sensor (801), einen Temperatursensor (801) oder einen Leitfähigkeitssensor (801) zur Erfassung der ersten oder zweiten Untermenge der erfassten Messdaten aufweist.

**10.** Verwendung eines ersten Grenzstandsensors und eines Vibrationssensors (704) innerhalb eines Gehäuses (201) zur Detektion eines Grenzstands.

**11.** Auswerteeinheit (706) zur Detektion eines Grenzstands unter Verwendung von mindestens zwei unterschiedlichen Messdatenauswerteverfahren,
wobei jedes der beiden Messdatenauswerteverfahren zu einer Detektion des Grenzstands ausgeführt ist,
wobei die Auswerteeinheit zur Auswertung zumindest einer ersten Untermenge von erfassten Messdaten, um den Grenzstand unter Anwendung eines ersten Messdatenauswerteverfahrens zu detektieren, und zur Auswertung zumindest einer von einem Vibrationssensor (704) erfassten zweiten Untermenge der erfassten Messdaten, um den Grenzstand unter Anwendung eines zweiten, anderen Messdatenauswerteverfahrens zu detektieren, ausgeführt ist.

**12.** Verfahren zur Detektion eines Grenzstands unter Verwendung von mindestens zwei unterschiedlichen Messdatenauswerteverfahren, aufweisend die Schritte:
Erfassen von Messdaten durch eine Multigrenzstandsensoranordnung (201, 705);
Auswerten zumindest einer ersten Untermenge der erfassten Messdaten, um den Grenzstand unter Anwendung eines ersten Messdatenauswerteverfahrens zu detektieren,
Auswertung zumindest einer zweiten Untermenge der erfassten Messdaten, wobei die zweite Untermenge durch einen Vibrationssensor (704) erfasst wurde, um den Grenzstand unter Anwendung eines zweiten, anderen Messdatenauswerte-verfahrens zu detektieren;
wobei die beiden Messdatenauswerteverfahren unterschiedliche Verfahren sind.

**13.** Programmelement, das, wenn es auf einem Prozessor (706) eines Multigrenzstandmessgeräts ausgeführt wird, das Multigrenzstandmessgerät anleitet, die Verfahrensschritte gemäß Anspruch 12 auszuführen.

**14.** Computerlesbares Medium, auf dem ein Programmelement gespeichert ist, das, wenn es auf einem Prozessor (706) eines Multigrenzstandmessgeräts ausgeführt wird, das Multigrenzstandmessgerät anleitet, die Verfahrensschritte gemäß Anspruch 12 auszuführen.
